# EUROPEAN PATENT SPECIFICATION

(11) **EP 0 744 307 B1**
(45) Date of publication and mention of the grant of the patent: **26.07.2000**
(21) Application number: 96107742.7
(22) Date of filing: 15.05.1996
(51) Int. Cl.: B60G 17/08, F16F 9/504

(54) **An improved double-acting shock absorber**
Verbesserter, doppeltwirkender Stossdämpfer
Amortisseur à double action amélioré

(30) Priority: 25.05.1995 IT TO950413
(43) Date of publication of application: 27.11.1996
(73) Proprietor: FIAT AUTO S.p.A., 10135 Torino (IT)
(72) Inventor: Di Giusto, Nevio, 10100 Torino TO (IT)
(74) Representative: Di Francesco, Gianni

(56) References cited:
- BE-A- 660 773
- DE-B- 1 209 007
- US-A- 2 957 703
- US-A- 5 154 442
- PATENT ABSTRACTS OF JAPAN vol. 006, no. 260 (M-180), 18 December 1982 & JP-A-57 154539 (TOYOTA JIDOSHA KOGYO KK), 24 September 1982,

## Description

The present invention generally pertains to the field of automobile shock absorbers. More particularly, the invention relates to a device for varying the damping characteristics of a shock absorber while the vehicle is running along a bend.

With modern vehicles further comfort during running whilst providing road-holding features is a constant requirement. It is known that in order to have greater comfort the shock absorbers must have softer damping characteristics, while more rigid features are required to gain good road-holding along bends, especially at high speed. To this end there are known commercially available automobile shock absorbers the damping characteristics of which can be changed by the user. With such absorbers, the desired kind of response can be selected before or during running, depending on whether sports or normal driving is performed.

However, this type of shock absorber always needs the driver's intervention to select the required kind of response.

It is an object of the present invention to provide a shock absorber capable of automatically varying the damping characteristics depending on the speed with which a bend is run along, so as to enhance roadability characteristics in a bend and then return back to initial characteristics on a straight road in order to keep the normal level of comfort of the vehicle.

Such a shock absorber is disclosed in the patent publications DE-B-12 09 007 and BE-A-660 773. However both type of shock absorbers vary their damping characteristics also when a longitudinal deceleration occurs, thereby increasing difficulties in controlling the movements of the damping rate adjuster element. In accordance with the invention, this object is accomplished by provision of an automobile double acting shock absorber as claimed in claim one.

Further characteristics and advantages are attained by a shock absorber as claimed in the dependent claim.

In order that the present invention may be well understood there will now be described a preferred embodiment thereof, given by way of example, reference being made to the accompanying drawings, in which:

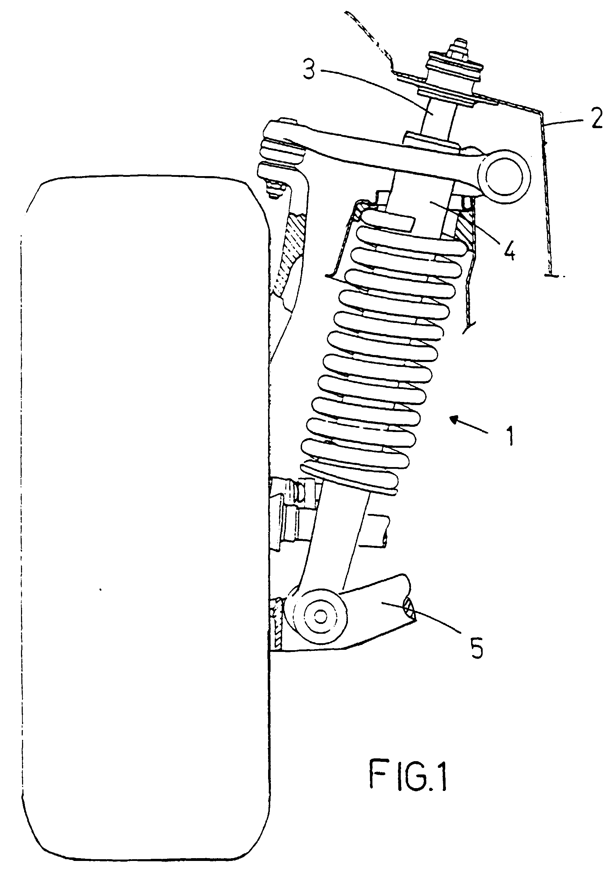

- FIG. 1: shows a shock absorber mounted on a vehicle;
- FIG. 2: is a sectional view schematically showing the device of the present invention mounted to the shock absorber of FIG. 1;
- FIG. 3: is a schematic plan view of the device of FIG. 1; and
- FIG. 4: diagrammatically shows the operational features of the shock absorber fitted with the device of this invention.

With reference to the drawings, numeral 1 designates a shock absorber counted to the body 2 of a vehicle. The shock absorber is composed of a stem 3 sliding within a body 4 following the movement of the vehicle suspension 5.

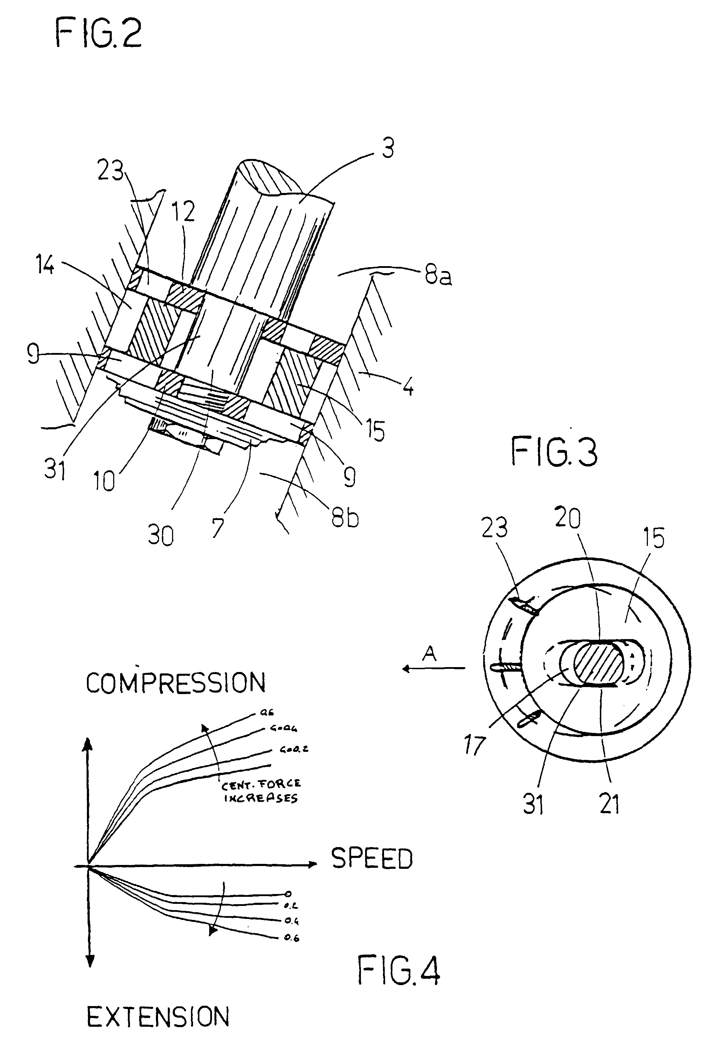

Referring to FIG. 2, valve means 7 are fitted at the lower end portion of the stem 3 within body 4. Valve means 7 cooperate with ports 9 obtained in a diaphragm 10 fixed to the stem 3 in controlling the flow of the shock absorber fluid. Said valves 7 and diaphragm 10 divide the body 4 in two communicating chambers 8a, 8b containing fluid which flows from one chamber to the other through the valves 7 and the ports 9 in diaphragm 10.

In an upper position with respect to diaphragm 10 there is provided a second diaphragm 12, also rigidly connected to the stem 3.

This second diaphragm defines with the first one an annular chamber 14 in which a metal ring 15 is disposed. Said ring 15 has an inner aperture 17 formed by two flat walls 20, 21, radiused by semicircular walls.

The thickness of ring 15 substantially corresponds to the height of camber 14, but is such to allow ring 15 to slide therein due to the fact that the outer diameter of the ring is considerably less than the bore of said chamber 14.

The second diaphragm 12 has elongated apertures 23 around its perimeter. Depending on their size and position, these apertures can be partly or completely closed by the metal ring 15 as this translates. Said translation movement of ring 15 is possible only in the direction of arrow A (FIG. 3) as the two flat, parallel walls 20, 21 cooperate with two flat faces 30 provided on the end portion of the stem 3 which is of smaller diameter at chamber 14.

According to the invention, when the vehicle on which the shock absorber 1 is mounted enters a bend travelling at a speed which is higher than a preset threshold value, the ring 15 translates in the direction of arrow A due to the centrifugal force. The higher the speed, the greater the translation movement will be.

In this way, as stated above, the apertures 23 are gradually obstructed by ring 15. Therefore, the fluid contained in the chambers of the shock absorber will have more difficulty in flowing from one chamber to the other, which will slow down the translation movement of the stem 3 and so vary the damping characteristics of the shock absorber. The shock absorber will have a more rigid performance consequent to the greater speed at which a bend is run along.

When the centrifugal action is over, the ring 15 returns in the rest position due to its own weight, due to the fact that shock absorbers are for other reasons always mounted slightly inclined towards the axis of the vehicle. Optionally, an elastic member can be provided to facilitate ring 15 in returning to the rest position, such that on a straight road in the absence of centrifugal force the vehicle is able to recuperate its initial comfort characteristics.

In FIG. 4 there is illustrated the possible behaviour of a shock absorber fitted with the device of the present invention. It is apparent that as the speed in the bend increases, the centrifugal force increases and consequently the rigidity of the shock absorber, either during compression or extension.

## Claims

1. An automobile double acting shock absorber comprising an outer body (4) and a stem (3) with an end portion slidable within said outer body, said outer body delimiting two chambers (8a, 8b) separated by a diaphragm (10) having ports (9) for a fluid, said chambers communicating with each other through valves (7) disposed at said end portion of the stem within said body (4) and adapted for controlling the ports (9) in said diaphragm (10), said end portion comprising a device for continuously varying the operational characteristics of the shock absorber when a centrifugal force exceeding a preset threshold value occurs, said device consisting of a metal ring (15) adapted for translation within a chamber (14) delimited by said diaphragm (10) and a second diaphragm (12) provided with apertures (23) obstructable by said ring during translation movement thereof, characterised in that said metal ring (15) has a central aperture (17) formed by two flat walls (20, 21) radiused by semicircular walls, said flat walls being adapted for co-operating with two flat faces (30) provided on the end portion of the stem (3) at said chamber (14) to prevent rotation of said metal ring (15).

2. A shock absorber as set forth in claim 1, wherein the apertures (23) of the second diaphragm are elongated apertures obtained in the perimeter of said second diaphragm.

## Patentansprüche

1. Doppeltwirkender Stoßdämpfer für Fahrzeuge, umfassend einen Außenkörper (4) und einen Schaft (3) mit einem Endabschnitt, der innerhalb des Außenkörpers gleitbar ist, wobei der Außenkörper zwei Kammern (8a, 8b) begrenzt, die durch eine Membran (10) mit Öffnungen (9) für eine Flüssigkeit voneinander getrennt sind, wobei die Kammern über Ventile (7) miteinander in Verbindung stehen, die am Endabschnitt des Schafts innerhalb des Körpers (4) angeordnet sind und zur Steuerung der Öffnungen (9) in der Membran (10) geeignet sind, wobei der Endabschnitt eine Vorrichtung zum kontinuierlichen Verändern der Betriebscharakteristik des Stoßdämpfers umfaßt, wenn eine Zentrifugalkraft, die einen festgesetzten Schwellenwert übersteigt, auftritt, wobei die Vorrichtung aus einem Metallring (15) besteht, der zur Verschiebung innerhalb einer Kammer (14) geeignet ist, welche von der Membran (10) und einer zweiten Membran (12) begrenzt ist, die wiederum mit Öffnungen (23) ausgestattet ist, die durch eine Verschiebungsbewegung des Rings blockierbar sind,
dadurch gekennzeichnet,
daß der Metallring (15) eine zentrale Öffnung (17) aufweist, die durch zwei flache Wände (20, 21) gebildet ist, die durch halbkreisförmige Wände abgerundet sind, wobei die flachen Wände zum Zusammenwirken mit zwei flachen Flächen (30), die auf dem Endabschnitt des Schafts (3) an der Kammer (14) vorgesehen sind, geeignet sind, um eine Rotation des Metallrings (15) zu verhindern.

2. Stoßdämpfer nach Anspruch 1,
dadurch gekennzeichnet,
daß die Öffnungen (23) in der zweiten Membran längliche Öffnungen sind, die im Umfang der zweiten Membran vorgesehen sind.

## Revendications

1. Amortisseur à double effet pour véhicule automobile, comprenant un corps extérieur (4) et une tige (3) à partie d'extrémité qui peut coulisser à l'intérieur dudit corps extérieur, ledit corps extérieur délimitant deux chambres (8a, 8b) séparées par un diaphragme (10) dans lequel sont ménagés des orifices (9) pour un fluide, lesdites chambres communiquant entre elles à travers des vannes (7) disposées à ladite partie d'extrémité de la tige à l'intérieur dudit corps (4) et aptes à régler les orifices (9) dudit diaphragme (10), ladite partie d'extrémité comprenant un dispositif destiné à modifier en continu les caractéristiques opérationnelles de l'amortisseur lorsqu'apparaît une force centrifuge qui dépasse une valeur de seuil préétablie, ledit dispositif consistant en une bague métallique (15) apte à une translation à l'intérieur d'une chambre (14) délimitée par ledit diaphragme (10) et un deuxième diaphragme (12) dans lequel sont ménagées des ouvertures (23) qui peuvent être obstruées par ladite bague pendant ledit déplacement de translation, caractérisé en ce que
ladite bague métallique (15) comporte une ouverture centrale (17) formée par deux parois plates (20, 21) qui se raccordent par des parois demi-circulaires, lesdites parois plates étant aptes à coopérer avec deux faces plates (30) agencées sur la partie d'extrémité de la tige (3) au niveau de ladite chambre (14) pour empêcher une rotation de ladite bague métallique (15).

2. Amortisseur selon la revendication 1, dans lequel les ouvertures (23) du deuxième diaphragme sont des ouvertures allongées ménagées dans le périmètre dudit deuxième diaphragme.
